# EUROPÄISCHE PATENTANMELDUNG

(11) **EP 1 312 537 A1**
(43) Veröffentlichungstag der Anmeldung: **21.05.2003**
(21) Anmeldenummer: 01127106.1
(22) Anmeldetag: 15.11.2001
(51) Int. Cl.: B62D 29/00

(54) **Montageverbindung und Verfahren zum Befestigen von Karosserieteilen**

(71) Anmelder: Ford Global Technologies, Inc., A subsidiary of Ford Motor Company, Dearborn, Michigan 48126 (US)
(72) Erfinder: Porschen, Peter, 50170 Kerpen (DE); Baumann, Matthias, 52070 Aachen (DE); Sweeney, Kevin Eugene, Dr., 52072 Aachen (DE); Stadtler, Arnold, 50935 Köln (DE)
(74) Vertreter: Drömer, Hans-Carsten, Dipl.-Ing.

(57) **Zusammenfassung**

Die Erfindung betrifft eine Montageverbindung und ein Verfahren, insbesondere für Kraftfahrzeuge, zum Befestigen von Karosserieteilen (10) und weiteren Fahrzeugteilen. Sie ist dadurch gekennzeichnet, daß mindestens zwei Karosserieteile untereinander und mindestens ein weiteres Fahrzeugteil unter Verwendung zumindest eines Befestigungselementes (12) verbunden sind, wobei zumindest ein Karosserieteil (10) und zumindest ein Fahrzeugteil mittels des Befestigungselementes (12) unmittelbar miteinander verbunden sind. Dadurch wird mit einfachen Mitteln die Möglichkeit geschaffen, beim Zusammenbau der Fahrzeugkomponenten bei der Anbringung von weiteren Fahrzeugteilen wie z.B. Teilen (11) des Fahrwerkes auch gleichzeitig die Karosserieteile (10) mit anzubringen, und auf diese Weise den Fertigungsschritt des eigentlichen Zusammensetzens der Karosserieteile (10) einzusparen.

## Beschreibung

Die Erfindung bezieht sich auf eine Montageverbindung, insbesondere für Kraftfahrzeuge, zum Befestigen von Karosserieteilen und weiteren Fahrzeugteilen und auf ein Verfahren für diese Befestigung.

Aus dem Stand der Technik sind verschiedene Verfahren zum Befestigen von Karosserieteilen und weiteren Fahrzeugteilen sowie Befestigungselemente für dieses Verfahren bekannt. Diese Verfahren sowie die entsprechenden Befestigungselemente spielen bei der Befestigung von Karosserieteilen und bei dem endgültigen Zusammenbau derselben eine wesentliche Rolle. Bei den bekannten Lösungen bestehen dabei die Teile insbesondere der Fahrzeugkarosserie zumeist aus geformtem Stahl, wobei die einzelnen Komponenten meist über Schweißverbindungen, Bolzen, Schrauben oder dgl. oder auch z. B. über Klebeverbindungen zusammengehalten werden. Nach dem Zusammenbau der Karosserieelemente insbesondere eines Fahrzeuges wird dann der zusammengesetzte Karosseriekörper in eine Beschichtungs-/ Lackierungseinheit geführt, in der dieser Körper mit einem Phosphat- Gemisch beschichtet wird, anschließend wird der Körper mit einer Elektro- Beschichtung versehen, um dadurch einen Korrosionsschutz zu erhalten. Schließlich wird danach die Grundierung und abschließend die Oberlackierung aufgetragen, die die endgültige Farbe des Fahrzeuges bestimmt. Nach Durchlaufen dieser Beschichtungs-/ Lackierungseinheit werden alle wesentlichen Teile und Komponenten insbesondere des Fahrzeuges in einer Montageeinheit an dem Karosseriekörper angebracht. Dies erfolgt insbesondere unter Verwendung von Schrauben, Muttern, Bolzen, Bohrungen oder dgl., wobei diese Elemente in den Körper mit integriert werden müssen.

Bei den bekannten Verfahren bzw. Anordnungen sowie bei der Herstellung z.B. von Fahrzeugen allgemein ergab sich durch äußere Einflüsse wie Umwelteinflüsse oder dgl. das Erfordernis, immer leichtere Fahrzeuge herstellen zu müssen, wodurch die Hersteller auf eine Verwendung anderer Materialien wie Aluminium oder Magnesium angewiesen waren. Dadurch ergab sich für die Produktion von Karosseriekörpern z.B. für Fahrzeuge die Tragrahmen-Technik, die im wesentlichen aus extrudierten Profilen gebildet wird. Es steht dabei insbesondere das Problem der Befestigung der extrudierten Profile im Vordergrund, bei den bekannten Lösungen werden zumeist Schweißverbindungen oder Schraubenverbindungen verwendet.

Aus dem Stand der Technik ist z.B. aus der US-A- 5 947 519 ein extrudiertes Befestigungselement aus Aluminium zum Verbinden eines in Längsrichtung verlaufenden Tragrahmenelementes und eines in Querrichtung verlaufenden Tragrahmenelementes eines Fahrzeuges bekannt. Es weist dabei das extrudierte Befestigungselement ein Paar von in Längsrichtung verlaufenden Seitenwänden auf, die von dem inneren Volumen des längs verlaufenden Tragrahmenelementes aufgenommen werden und ein Paar von in Querrichtung verlaufenden Seitenwänden, die von dem inneren Volumen des quer verlaufenden Tragrahmenelementes aufgenommen werden. Dabei erstrecken sich innere Seitenwände durch jedes der Paare längs und quer verlaufender Seitenwände, um so geschlossene Räume zur Erhöhung der Steifigkeit und eine Verbesserung des strukturellen Aufbaus des Befestigungselementes zu erzielen. Das längs verlaufende Tragrahmenelement ist umlaufend um das eine Ende des Befestigungselementes verschweißt, entsprechend das quer verlaufende Tragrahmenelement um das andere Ende des Befestigungselementes. Im weiteren kann das Befestigungselement z.B. zur Festlegung einer Stoßfänger- Anordnung mit zusätzlichen Bohrungen versehen sein.

In der US-A- 4 988 230 ist ein extrudiertes Befestigungselement offenbart, mit einem in Längsrichtung sich erstreckenden, im wesentlichen hohlen Leitungselement und wenigstens einem sich in Längsrichtung erstreckenden hohlen Flansch, der sich außerhalb und integral mit einem längs verlaufenden Seitenbereich des Leitungselementes erstreckt. Diese Druckschrift offenbart außerdem eine Verbundstruktur, bei der wenigstens ein längs verlaufendes lineares Leitungselement einen durch Wände definierten hohlen Umfangsbereich umfaßt, mit inneren Flächen, die zum Angreifen der äußeren Flächen des hohlen Flansches des Befestigungselementes vorgesehen sind. In dieser Verbundstruktur wird der Umfangsbereich des linearen Leitungselementes über den hohlen Flansch des Befestigungselementes aufgesetzt, bis zu einer Stelle, an der die äußere Fläche des linearen Leitungselementes die integrale Wand des Befestigungselementes umgibt und die äußere Fläche der Seitenwände des hohlen Flansches und die innere Fläche des linearen Leitungselementes einander über im wesentlichen die gesamte Länge und den gesamten Umfang des Flansches angreifen. Es kann dabei bei einer Ausführungsform vorgesehen sein, daß bestimmte kleine Bereiche des Umfanges des linearen Leitungselementes entfernbar ausgebildet sind, um z.B. Bohrungen oder dgl. verschiedener Größe zum Anbringen zusätzlicher Schweißstellen zur Erhöhung der Belastbarkeit der Verbindung zwischen Befestigungselement und linearem Leitungselement vorzusehen.

Die bekannten Ausführungen ermöglichen an sich ein zufriedenstellendes Befestigen der Karosserieteile z. B. für ein Fahrzeug und zwar auch i.V.m. weiteren Fahrzeugteilen wie z. B. den entsprechenden Teilen des Fahrwerkes. Nachteilig ist dabei aber insbesondere der durchgängig konstruktiv aufwendige und schwierige Aufbau der bekannten Anordnungen bzw. der bekannten Verfahren zu deren Herstellung, die nur kostenintensiv durchzuführen sind.

Der Erfindung liegt die Aufgabe zugrunde, die bekannten Verfahren zum Befestigen von Karosserieteilen und weiteren Fahrzeugteilen wie z.B. Teilen eines Fahrwerkes, insbesondere von Kraftfahrzeugen sowie die bekannten Befestigungselemente für dieses Verfahren unter Beibehaltung der bisherigen Vorteile in der Weise zu verbessern bzw. weiterzuentwickeln, daß eine einfachere und preisgünstigere Befestigung von Karosserieteilen und weiteren Fahrzeugteilen, insbesondere von Kraftfahrzeugen ermöglicht wird, und zwar bei Durchführung von weniger Fertigungsschritten und unter Verwendung von weniger Bauteilen als bisher. Das gewünschte Verfahren bzw. das gewünschte Befestigungselement soll dabei gleichzeitig einfach und wirtschaftlich durchführbar bzw. herstellbar sein.

Die Aufgabe wird erfindungsgemäß mit den Merkmalen des Patentanspruches 1 gelöst.

Indem mindestens zwei Karosserieteile untereinander und mindestens ein weiteres Fahrzeugteil unter Verwendung zumindest eines Befestigungselementes verbunden sind, wobei zumindest ein Karosserieteil und zumindest ein Fahrzeugteil mittels des Befestigungselementes unmittelbar miteinander verbunden sind, wird mit einfachen Mitteln die Möglichkeit geschaffen, beim Zusammenbau der Fahrzeugkomponenten bei der Anbringung von weiteren Fahrzeugteilen wie z.B. Teilen des Fahrwerkes auch gleichzeitig die Karosserieteile mit anzubringen, und auf diese Weise den Fertigungsschritt des eigentlichen Zusammensetzens der Karosserieteile einzusparen. Es werden demnach die Karosserieteile und die Fahrzeugteile mittels des Befestigungselementes direkt, ohne Vormontage der Karosserieteile, verbunden. Dies reduziert die Kosten für die Herstellung bzw. das dazu erforderliche Verfahren erheblich. Weiterhin führt das erfindungsgemäße Verfahren zu einer wesentlichen Gewichtsreduzierung, dadurch, daß weniger Teile für die Befestigung verwendet werden, wodurch sich auch eine Zeitersparnis bei dem Zusammenbau z.B. eines Fahrzeuges insgesamt ergibt.

Bei der bevorzugten Ausführungsform der vorliegenden Erfindung erfolgt die Befestigung der Karosserieteile und der Teile des Fahrwerkes insbesondere von Kraftfahrzeugen unter Verwendung derselben Befestigungselemente. Bei alternativen oder ergänzenden Ausführungsformen erfolgt die Befestigung der Karosserieteile und der Teile des Motorraumes und/ oder der Teile der Innenausstattung unter Verwendung derselben Befestigungselemente. Eine erfindungsgemäße Ausführung betrifft also jede Befestigung jeglicher Fahrzeugteile an der Karosserie, sofern die Fahrzeugteile nicht Bestandteil der tragenden Karosseriestruktur sind und die Merkmale des Patentanspruches 1 zutreffen.

Bei der bevorzugten Ausführungsform der vorliegenden Erfindung ist das erfindungsgemäße Verfahren gekennzeichnet durch die folgenden Verfahrensschritte:
- Herstellen von Befestigungselementen für die Karosserieteile und die zu befestigenden Teile des Fahrwerkes, insbesondere durch Extrudieren und anschließendes auf Länge bringen;
- Anbringen der Befestigungselemente an mehreren Stellen an einem für die Karosserie insbesondere eines Fahrzeuges vorgesehenen Lagerarm;
- Einsetzen eines für die Karosserie insbesondere eines Fahrzeuges vorgesehenen Querträgers in das an dem Lagerarm angebrachte Befestigungselement;
- Zusammensetzen des restlichen Unterkörpers insbesondere für ein Fahrzeug;
- Befestigen eines hinteren Fahrwerkselementes an dem Unterkörper an der Stelle des an dem Lagerarm und dem Querträger angebrachten Befestigungselementes.

Mit diesen Verfahrensschritten wird insbesondere erreicht, daß der Fertigungsschritt des eigentlichen Zusammensetzens der Karosserieteile eingespart werden kann, sondern daß vielmehr der Fertigungsschritt des eigentlichen Zusammensetzens der Karosserieteile in den Fertigungsschritt des nachträglichen Zusammensetzens bzw. Anbringens zusätzlicher Karosserie- oder Fahrwerkselemente integriert werden kann. Dies führt zu einer erheblichen Kostenreduzierung.

Nach einem weiteren Merkmal der vorliegenden Erfindung werden die Befestigungselemente für die Karosserieteile und die zu befestigenden Teile des Fahrwerkes nach dem Extrudieren auf Länge geschnitten oder (ab-) geschert und anschließend entgratet.

Zweckmäßig ist es nach einem weiteren Merkmal der vorliegenden Erfindung außerdem, daß das Anbringen der Befestigungselemente an mehreren Stellen des Lagerarmes durch Anschweißen erfolgt. Dabei empfiehlt es sich, daß das Anbringen der Befestigungselemente an jeder Seite des Lagerarmes erfolgt.

Nach einem weiteren Merkmal der vorliegenden Erfindung erfolgt das Einsetzen des Querträgers in das an dem Lagerarm angebrachte Befestigungselement im wesentlichen rechtwinklig.

Es empfiehlt sich auch, daß das Zusammensetzen des restlichen Unterkörpers durch Zusammenschweißen erfolgt.

Nach einem weiteren Ausgestaltungsmerkmal des erfindungsgemäßen Verfahrens ist vorgesehen, daß das Einsetzen des Querträgers in das an dem Lagerarm angebrachte Befestigungselement und/ oder das Zusammensetzen des restlichen Unterkörpers unter Einbringung eines zusätzlichen Klebe-/ Dichtmittels erfolgt. Dadurch werden die Steifigkeits- und Dichtigkeitseigenschaften zusätzlich verbessert.

Zweckmäßig ist es nach einem weiteren Merkmal der vorliegenden Erfindung außerdem, daß die Hinterachse insbesondere eines Fahrzeuges an dem Unterkörper an der Stelle des an dem Lagerarm und dem Querträger angebrachten Befestigungselementes befestigt wird. Dabei empfiehlt sich, daß die hintere Radaufhängung insbesondere eines Fahrzeuges an dieser Stelle an dem Unterkörper befestigt wird.

Nach einem weiteren Ausgestaltungsmerkmal des erfindungsgemäßen Verfahrens wird bevorzugt das hintere Fahrwerkselement über Schrauben an dem Unterkörper an der Stelle des an dem Lagerarm und dem Querträger angebrachten Befestigungselementes befestigt.

Die der Erfindung zugrundeliegende Aufgabe wird hinsichtlich des Befestigungselementes für das erfindungsgemäße Verfahrens dadurch gelöst, das Befestigungselement zur gleichzeitigen Befestigung von Karosserieteilen und weiteren Fahrzeugteilen insbesondere von Kraftfahrzeugen ausgebildet ist. Durch diese Ausbildung werden die oben im Zusammenhang mit dem erfindungsgemäßen Verfahren erwähnten Vorteile auch durch die konstruktive Ausführung erreicht. Es wird dabei das Befestigungselement bevorzugt zur gleichzeitigen Befestigung von Karosserieteilen und Teilen des Fahrwerkes insbesondere von Kraftfahrzeugen ausgebildet sein. Alternativ oder ergänzend kann das Befestigungselement zur gleichzeitigen Befestigung von Karosserieteilen und Teilen des Motors und/ oder Teilen der Innenausstattung ausgebildet sein.

Es empfiehlt sich dabei, daß das Befestigungselement als ein extrudiertes, auf Länge gebrachtes, netzwerkartiges Hohlprofilelement ausgebildet ist, das einen im wesentlichen flachen Anschlag zur Anlage an einen für die Karosserie insbesondere eines Fahrzeuges vorgesehen Lagerarm aufweist und zum Einsetzen in einen für die Karosserie eines Fahrzeuges vorgesehenen Querträger ausgebildet ist, wobei das Befestigungselement weiterhin mit Mitteln zum Befestigen eines hinteren Fahrwerkselementes an der Verbindungsstelle zwischen Lagerarm und dem Querträger versehen ist. Dies ist eine konstruktiv geeignete Ausführung des erfindungsgemäßen Befestigungselementes zur Anbringung eines hinteren Fahrwerkselementes an einem für die Karosserie insbesondere eines Fahrzeuges vorgesehen Lagerarm bzw. Querträger.

Nach einem letzten Merkmal der vorliegenden Erfindung sind dabei bevorzugt die Mittel des Befestigungselementes zum Befestigen eines hinteren Fahrwerkselementes als Schraubenbohrungen ausgebildet.

Die Erfindung ist in den Figuren der Zeichnung in einem Ausführungsbeispiel dargestellt. Es zeigen:
- Fig. 1: eine schematische Vorderansicht eines für die Karosserie insbesondere eines Fahrzeuges vorgesehenen Lagerarmes und eines erfindungsgemäßen, daran anzubringenden Befestigungselementes,
- Fig. 2: die schematische Vorderansicht nach Fig. 1 mit an dem Lagerarm angebrachten Befestigungselement und einem angedeuteten Teilbereich eines in das Befestigungselement einzusetzenden Querträgers,
- Fig. 3: die Ansicht gemäß Fig. 2 in perspektivischer Darstellung mit auf das Befestigungselement aufgesetztem Querträger,
- Fig. 4: die Ansicht gemäß Fig. 3 mit an dem Unterkörper an der Stelle des an dem Lagerarm und dem Querträger angebrachten Befestigungselementes über Schrauben befestigter hinterer Radaufhängung,
- Fig. 5: eine perspektivische Vorderansicht des erfindungsgemäßen Befestigungselementes,
- Fig. 6: eine Vorderansicht des erfindungsgemäßen Befestigungselementes,
- Fig. 7: eine Seitenansicht des erfindungsgemäßen Befestigungselementes.

Das erfindungsgemäße Verfahren dient zum Befestigen von generell mit 10 bezeichneten Karosserieteilen und von weiteren Fahrzeugteilen wie z.B. von mit 11 bezeichneten Teilen eines Fahrwerkes insbesondere eines Kraftfahrzeuges, oder z.B. von Teilen des Motorraumes oder von Teilen der Innenraumausstattung. Die Befestigung der Karosserieteile 10 und der weiteren Fahrzeugteile insbesondere von Kraftfahrzeugen erfolgt dabei erfindungsgemäß unter Verwendung derselben Befestigungselemente, die mit 12 bezeichnet sind.

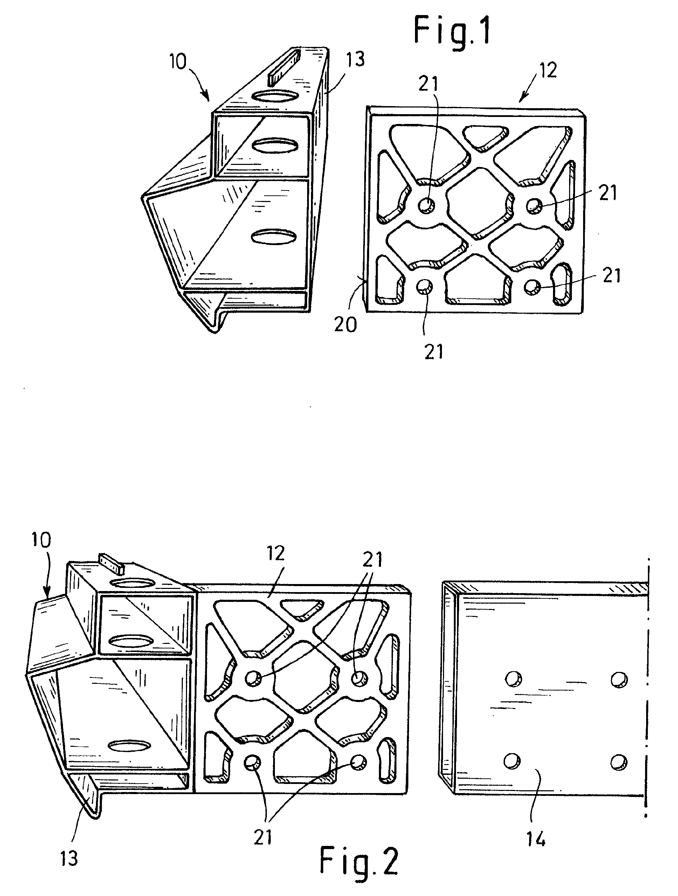

Das erfindungsgemäße Verfahren wird durch ein in den Figuren der Zeichnung dargestelltes Ausführungsbeispiel näher erläutert, siehe dazu insbesondere die Fig. 1 bis 4. Gemäß dem dargestellten Ausführungsbeispiel des erfindungsgemäßen Verfahrens werden folgende Verfahrensschritte durchgeführt:

Zunächst werden Befestigungselemente 12 für die Karosserieteile 10 und die zu befestigenden Teile 11 des Fahrwerkes hergestellt, und zwar insbesondere durch Extrudieren und anschließendes auf Länge bringen. Dabei werden bei einer Ausführungsform die Befestigungselemente 12 für die Karosserieteile 10 und die zu befestigenden Teile 11 des Fahrwerkes nach dem Extrudieren auf Länge geschnitten oder (ab-) geschert und anschließend entgratet. Im nächsten Schritt werden dann die Befestigungselemente 12 an mehreren Stellen an einem für die Karosserie insbesondere eines Fahrzeuges vorgesehenen Lagerarm 13 angebracht, es ist dazu in der Fig. 1 ein entsprechender Lagerarm 13 und ein an diesem anzubringendes Befestigungselement 12 dargestellt. Das Anbringen der Befestigungselemente 12 an den mehreren Stellen des Lagerarmes 13 kann dabei z.B. durch Anschweißen erfolgen. Das Anbringen der Befestigungselemente 12 wird dabei zweckmäßig an jeder Seite des Lagerarmes 13 erfolgen. Es ist dazu in der Fig. 2 u.a. ein an dem Lagerarm 13 angebrachtes Befestigungselement 12 gezeigt.

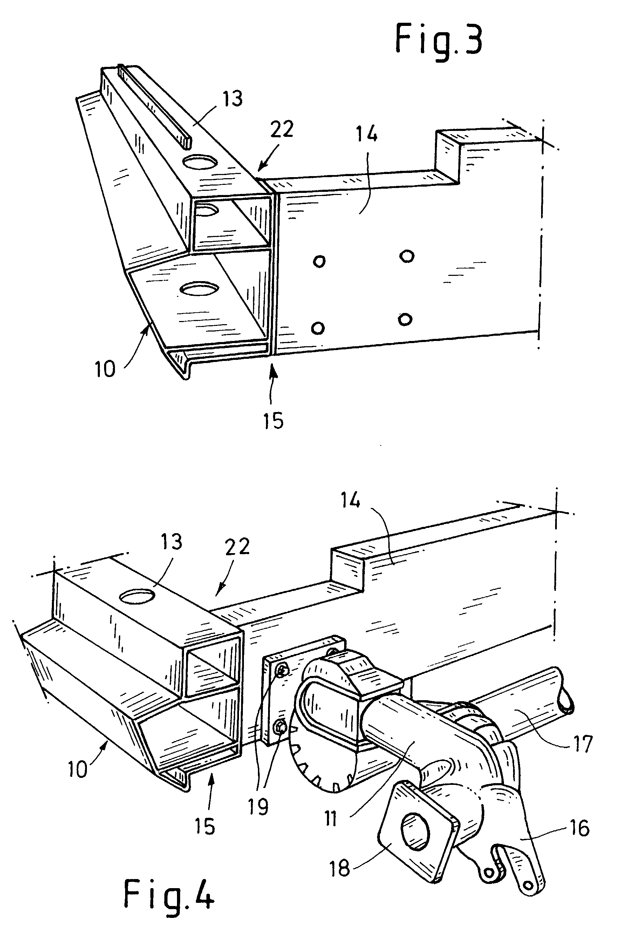

Danach wird, siehe wieder die Fig. 2, ein für die Karosserie insbesondere eines Fahrzeuges vorgesehener Querträger 14 in das an dem Lagerarm 13 angebrachte Befestigungselement 12 eingesetzt, wobei es sich empfiehlt, das Einsetzen des Querträgers 14 in das an dem Lagerarm 13 angebrachte Befestigungselement 12 im wesentlichen rechtwinklig erfolgen zu lassen. In der Fig. 3 ist dazu ein rechtwinklig mit einem Lagerarm 13 verbundener Querträger 14 dargestellt. Bei der dargestellten Ausführungform werden der Lagerarm 13 und der Querträger 14 ebenfalls durch extrudierte Profile gebildet, wobei der Lagerarm 13 einen flachen Bereich zur Anlage des Befestigungselementes 12 aufweist, außerdem ist der Querträger 14 durch ein extruidertes Profil sehr einfachen Querschnitts gebildet.

Danach erfolgt das Zusammensetzen des restlichen Unterkörpers 15 insbesondere für ein Fahrzeug, was z.B. durch Zusammenschweißen erfolgen kann. Dabei kann zur Verbesserung der Steifigkeits- und Dichtigkeitseigenschaften das Einsetzen des Querträgers 14 in das an dem Lagerarm 13 angebrachte Befestigungselement 12 und/ oder das Zusammensetzen des restlichen Unterkörpers 15 unter Einbringung eines zusätzlichen Klebe-/ Dichtmittels erfolgen.

Anschließend wird, siehe die Fig. 4 der Zeichnung, ein hinteres Fahrwerkselement 16 an dem Unterkörper 15 an der Stelle des an dem Lagerarm 13 und dem Querträger 14 angebrachten Befestigungselementes 12 befestigt. Es kann dabei z.B. die Hinterachse 17 insbesondere eines Fahrzeuges an dem Unterkörper 15 an der Stelle des an dem Lagerarm 13 und dem Querträger 14 angebrachten Befestigungselementes 12 befestigt werden. Dabei empfiehlt sich, siehe wieder die Fig. 4, daß die hintere Radaufhängung 18 insbesondere eines Fahrzeuges an dieser Stelle an dem Unterkörper 15 befestigt wird.

Bei dem dargestellten Ausführungsbeispiel wird, siehe Fig 1 oder 2 i.V.m. Fig.4, das hintere Fahrwerkselement 16, wie z.B. eine Hinterachse 17 oder deren hintere Radaufhängung 18, über Schrauben 19 an dem Unterkörper 15 an der Stelle des an dem Lagerarm 13 und dem Querträger 14 angebrachten Befestigungselementes 12 befestigt. Es dient dabei das Befestigungselement 12 auch zur Erhöhung der für das hintere Fahrwerkselement 16 erforderlichen Steifigkeit und Tragfähigkeit.

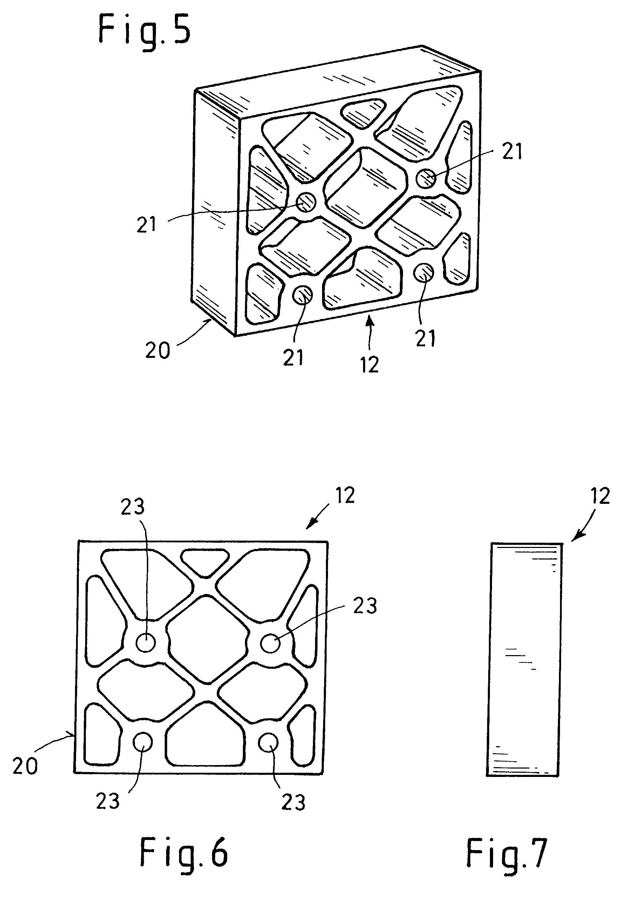

Das erfindungsgemäße Befestigungselement 12 ist in einer Ausführungsform in den Fig. 5 bis 7 dargestellt. Es ist dieses Befestigungselement 12 in diesem Falle zur gleichzeitigen Befestigung von Karosserieteilen 10 und Teilen 11 des Fahrwerkes insbesondere von Fahrzeugen ausgebildet. Dabei ist, siehe z.B. Fig. 5 i.V.m. Fig. 1, das Befestigungselement 12 als ein extrudiertes, auf Länge gebrachtes, netzwerkartiges Hohlprofilelement ausgebildet , das einen im wesentlichen flachen Anschlag 20 zur Anlage an einen für die Karosserie insbesondere eines Fahrzeuges vorgesehen Lagerarm 13 aufweist und zum Einsetzen in einen für die Karosserie eines Fahrzeuges vorgesehenen Querträger 14 ausgebildet ist, wobei das Befestigungselement 12 weiterhin mit Mitteln 21 zum Befestigen eines hinteren Fahrwerkselementes 16 an der Verbindungsstelle 22 zwischen Lagerarm 13 und dem Querträger 14 versehen ist. Diese Mittel 21 des Befestigungselementes 12 zum Befestigen eines hinteren Fahrwerkselementes 16 sind bei dem dargestellten Ausführungsbeispiel als Schraubenbohrungen 23 ausgebildet, in die die Schrauben 19 zur Befestigung z.B. der hinteren Radaufhängung 18 eingeschraubt werden, siehe Fig. 2 i.V.m. Fig. 4 der Zeichnung.

Das erfindungsgemäße Verfahren bzw. das erfindungsgemäße Befestigungselement 12 bieten erstmalig die Möglichkeit, beim Zusammenbau der Fahrzeugkomponenten bei der Anbringung von weiteren Fahrzeugteilen wie z.B. Teilen 11 des Fahrwerkes auch gleichzeitig die Karosserieteile 10 mit anzubringen, und auf diese Weise den Fertigungsschritt des eigentlichen Zusammensetzens der Karosserieteile 10 einzusparen. Dadurch werden die Kosten für die Herstellung bzw. das dazu erforderliche Verfahren erheblich reduziert. Das erfindungsgemäße Verfahren führt außerdem dadurch, daß weniger Teile für die Befestigung verwendet werden, zu einer wesentlichen Gewichtsreduzierung, weiterhin ergibt sich dadurch auch eine Zeitersparnis bei dem Zusammenbau z.B. eines Fahrzeuges insgesamt.

Wie bereits erwähnt, ist die dargestellte Ausführungsform nur eine beispielsweise Verwirklichung der Erfindung, diese ist nicht darauf beschränkt, es sind vielmehr noch mancherlei Abänderungen und Ausbildungen möglich. So ist insbesondere eine andere Anwendung des erfindungsgemäßen Verfahrens als bei den dargestellten Karosserieteilen 10 und Teilen 11 des Fahrwerkes denkbar, weiterhin vorgesehen sind Abwandlungen in der Ausbildung des Befestigungselementes 12 selbst. So ist z.B. bei der Ausführungsform mit einer gleichzeitigen Befestigung von Karosserieteilen und Teilen des Motorraumes vorgesehen, Teile der elektrischen Anlage oder der Kraftübertragungsanlage (z.B. Batterie, Motoraufhängung, Getriebe) z.B. zusammen mit der Frontschürze zu befestigen.

### BEZUGSZEICHENLISTE

- 10: Karosserieteil
- 11: Teil des Fahrwerks
- 12: Befestigungselemente ( für 10,11 )
- 13: Lagerarm ( für 10 )
- 14: Querträger (für 10)
- 15: Unterkörper
- 16: hinteres Fahrwerkselement
- 17: Hinterachse
- 18: hintere Radaufhängung
- 19: Schrauben ( für 16 an 12 )
- 20: Anschlag ( von 12 für 13 )
- 21: Mittel zum Befestigen von 16 bei 22
- 22: Verbindungsstelle von 13 und 14
- 23: Schraubenbohrung ( in 12 für 19)

## Patentansprüche

1. Montageverbindung, insbesondere für Kraftfahrzeuge, zum Befestigen von Karosserieteilen (10) und weiteren Fahrzeugteilen,
**dadurch gekennzeichnet, daß**
mindestens zwei Karosserieteile (10) miteinander und mindestens ein weiteres Fahrzeugteil unter Verwendung zumindest eines Befestigungselementes (12) verbunden sind, wobei zumindest ein Karosserieteil (10) und zumindest ein Fahrzeugteil mittels des Befestigungselementes (12) unmittelbar miteinander verbunden sind.

2. Montageverbindung nach Anspruch 1,
**dadurch gekennzeichnet, daß**
das Befestigungselement (12) zur gleichzeitigen Befestigung von Karosserieteilen (10) und Teilen (11) des Fahrwerkes ausgebildet ist.

3. Montageverbindung nach Anspruch 1 oder 2,
**dadurch gekennzeichnet, daß**
das Befestigungselement (12) als ein extrudiertes, auf Länge gebrachtes, netzwerkartiges Hohlprofilelement ausgebildet ist, das einen im wesentlichen flachen Anschlag (20) zur Anlage an einen für die Karosserie vorgesehenen Lagerarm (13) aufweist und zum Einsetzen in einen für die Karosserie eines Fahrzeuges vorgesehenen Querträger (14) ausgebildet ist, wobei das Befestigungselement (12) weiterhin mit Mitteln (21) zum Befestigen eines hinteren Fahrwerkselementes (16) an der Verbindungsstelle (22) zwischen Lagerarm (13) und dem Querträger (14) versehen ist.

4. Montageverbindung nach Anspruch 3
**dadurch gekennzeichnet, daß**
die Mittel (21) des Befestigungselementes (12) zum Befestigen eines hinteren Fahrwerkselementes (16) als Schraubenbohrungen (23) ausgebildet sind.

5. Verfahren zum Befestigen von Karosserieteilen (10) und Teilen (11) des Fahrwerkes nach Anspruch 2, **gekennzeichnet durch** die folgenden Verfahrensschritte:
- Herstellen von Befestigungselementen (12) für die Karosserieteile (10) und die zu befestigenden Teile (11) des Fahrwerkes, insbesondere **durch** Extrudieren und anschließendes auf Länge bringen;
- Anbringen der Befestigungselemente (12) an mehreren Stellen an einem für die Karosserie vorgesehenen Lagerarm (13);
- Einsetzen eines für die Karosserie vorgesehenen Querträgers (14) in das an dem Lagerarm (13) angebrachte Befestigungselement (12);
- Zusammensetzen des restlichen Unterkörpers (15);
- Befestigen eines hinteren Fahrwerkselementes (16) an dem Unterkörper (15) an der Stelle des an dem Lagerarm (13) und dem Querträger (14) angebrachten Befestigungselementes (12).

6. Verfahren nach Anspruch 5,
**dadurch gekennzeichnet, daß**
das Anbringen der Befestigungselemente (12) an mehreren Stellen des Lagerarmes (13) durch Anschweißen erfolgt.

7. Verfahren nach Anspruche 5 oder 6,
**dadurch gekennzeichnet, daß**
das Anbringen der Befestigungselemente (12) an jeder Seite des Lagerarmes (13) erfolgt.

8. Verfahren nach einem der Ansprüche 5 bis 7,
**dadurch gekennzeichnet, daß**
das Einsetzen des Querträgers (14) in das an dem Lagerarm (13) angebrachte Befestigungselement (12) im wesentlichen rechtwinklig erfolgt.

9. Verfahren nach einem der Ansprüche 5 bis 8,
**dadurch gekennzeichnet, daß**
das Zusammensetzen des restlichen Unterkörpers (16) durch Zusammenschweißen erfolgt.

10. Verfahren nach einem der Ansprüche 5 bis 9,
**dadurch gekennzeichnet, daß**
das Einsetzen des Querträgers (14) in das an dem Lagerarm (13) angebrachte Befestigungselement (12) und/ oder das Zusammensetzen des restlichen Unterkörpers (16) unter Einbringung eines zusätzlichen Klebe-/Dichtmittels erfolgt.

11. Verfahren nach einem der Ansprüche 5 bis 10,
**dadurch gekennzeichnet, daß**
eine Hinterachse (17) am Unterkörper (16) an der Stelle des an dem Lagerarm (13) und dem Querträger (14) angebrachten Befestigungselementes (12) befestigt wird.

12. Verfahren nach einem der Ansprüche 5 bis 11,
**dadurch gekennzeichnet, daß**
die hintere Radaufhängung (18) am Unterkörper (16) an der Stelle des an dem Lagerarm (13) und dem Querträger (14) angebrachten Befestigungselementes (12) befestigt wird.

13. Verfahren nach einem der Ansprüche 5 bis 12,
**dadurch gekennzeichnet, daß**
das hintere Fahrwerkselement (16) über Schrauben (19) an dem Unterkörper (16) an der Stelle des an dem Lagerarm (13) und dem Querträger (14) angebrachten Befestigungselementes (12) befestigt wird.
